**Europäisches Patentamt**

**European Patent Office**

**Office européen des brevets**

(19)

(11) Veröffentlichungsnummer : **0 339 488 B1**

(12)

# EUROPÄISCHE PATENTSCHRIFT

(45) Veröffentlichungstag der Patentschrift :
**27.05.92 Patentblatt 92/22**

(51) Int. Cl.⁵ : **B65G 47/14,** B65G 47/12

(21) Anmeldenummer : **89107108.6**

(22) Anmeldetag : **20.04.89**

(54) **Vereinzelungsvorrichtung für Stäbe.**

(30) Priorität : **27.04.88 DE 3814195**

(43) Veröffentlichungstag der Anmeldung :
**02.11.89 Patentblatt 89/44**

(45) Bekanntmachung des Hinweises auf die
Patenterteilung :
**27.05.92 Patentblatt 92/22**

(84) Benannte Vertragsstaaten :
**AT BE CH DE FR GB IT LI LU NL SE**

(56) Entgegenhaltungen :
**DE-A- 2 118 976**
**DE-A- 2 357 758**
**DE-B- 1 280 742**
**GMA - Heft 49, 3. Dezember 1987, Abstract**
**DE-U-8 712 462 (STEINER)**

(73) Patentinhaber : **HANS KALTENBACH**
**MASCHINENFABRIK GMBH & CO.**
**Gewerbestrasse 18**
**W-7850 Lörrach (DE)**

(72) Erfinder : **Burkard, Rudolf**
**Bahnhofstrasse 90**
**W-7888 Rheinfelden 4 (DE)**

(74) Vertreter : **Patentanwälte Dipl.-Ing. Hans**
**Schmitt Dipl.-Ing. Wolfgang Maucher**
**Dreikönigstrasse 13**
**W-7800 Freiburg i.Br. (DE)**

EP 0 339 488 B1

Jouve, 18, rue Saint-Denis, 75001 PARIS

## Beschreibung

Die Erfindung betrifft eine Vereinzelungsvorrichtung für Bündel von Stäben, insbesondere mit unrundem Querschnitt, mit in parallelen. Ebenen muldenförmig durchhängenden Gurten, Ketten od.dgl. Zugelementen zur Aufnahme des Bündels, welche Zugelemente an ihrem der Vereinzelungsstelle abgewandten, insbesondere höher befindlichen Ende fixiert und an der Vereinzelungsstelle in ihrer Orientierungsrichtung über Umlenkrollen und/oder Trommeln anziehbar z.B. auf Trommeln aufwickelbar und wieder abwickelbar sind, wobei im Bereich der Vereinzelungsstelle ein Transportmittel zum Abführen des vereinzelten Stabes und mit Abstand darüber ein Kontrollmittel zum Zurückweisen von im Querschnitte zu großen oder in einer Fehlstellung orientierten Stäben vorgesehen sind.

Eine derartige Vereinzelungsvorrichtung für im Querschnitt runde Materialstäbe ist bekannt und hat sich bewährt, weil die runden Stäbe nach einem genügend hohen Anheben mit Hilfe der dann angezogenen Zugelemente, die durch diese Anziehbewegung aus ihrer Muldenform in eine etwas gestrecktere Lage kommen, gut auf das weiterführende Transportmittel übergeleitet werden können, da sie ein Stück weit selbst rollen können. Ein als Abweiser ausgebildetes Kontrollmittel kann dabei verhindern, daß mehrere übereinanderliegende Stäbe gleichzeitig auf das weiterführende Fördermittel oder Transportmittel rollen.

Es wurde schon versucht, diese bekannte Vereinzelungsvorrichtung für Rohre oder Profile mit quadratischem Querschnitt - mit abgerundeten Ecken - einzusetzen. Da diese jedoch am Übergang von der Gurtmulde zu dem weiterfördernden Transportmittel nicht von selbst weiterrollen können, kann es an dieser Stelle zu einem Stau, zu einer Verkantung oder Verklemmung mehrerer Materialstäbe kommen. Völlig unbrauchbar ist diese Vorrichtung für Profilstäbe mit von der runden oder quadratischen Form abweichendem, z.B. rechteckigem Querschnitt und insbesondere für solche mit scharfen oder gar zerklüfteten Kanten und Seitenflächen.

Aus der DE-B- 12 80 742 ist eine Vereinzelungsvorrichtung bekannt, bei welcher am Übergang von der durch die Zugelemente gebildeten Mulde zu dem weiterfördernden Transportmittel eine im Querschnitt sägezahnförmige Walze vorgesehen ist, die zwischen jeweils zwei Ketten oder Zugelementen verläuft und mit ihren im Querschnitt sägezahnförmigen Vorsprüngen jeweils einen einzelnen Stab erfassen kann. Dabei ist der Durchmeser dieser Walze erheblich größer als der der Umlenkrollen, so daß die Stäbe aus der Mulde mit Abstand über die Umlenkrolle gehoben werden und aus dieser Höhe auf das weiterführende Transportmittel fallen. Dies kann vor allem bei Vollmaterial zu einer frühen Zerstörung dieses Transportmittels führen. Darüber hinaus ist die große Länge dieser Walzen ungünstig, da ein Profilstab in der jeweiligen Ausnehmung nur dann wirklich liegenbleibt, wenn er genau parallel dazu orientiert ist. Sind die Stäbe in der Gurtmulde durch ihre gegenseitige Beeinflussung etwas- schräg und evtl. sogar kreuz und quer angeordnet, werden sie von dem relativ langestreckten Vorsprung dieser Walze gar nicht oder vielleicht nur unzureichend erfasst und können beim Anheben wieder zurückfallen und dadurch unter Umständen das Durcheinander in der Mulde noch vergrößern.

Es besteht deshalb die Aufgabe, eine Vereinzelungsvorrichtung der eingangs erwähnten Art dahingehend zu verbessern, daß damit auch quadratische, rechteckige und sonstige in ihrem Querschnitt von einer Kreisform abweichende Stäbe, Stangen oder Profile vereinzelt werden können und insbesondere eine Beschädigungsgefahr für das weiterführende Transportmittel weitestgehend vermieden wird.

Zur Lösung dieser Aufgabe ist eine Vereinzelungsvorrichtung der eingangs erwähnten Art dadurch gekennzeichnet, daß zwei- in Richtung der Achse der Umlenkrolle schmale - Hebevorsprünge, z.B. Finger, Segmentscheiben oder Schwenkhebel vorgesehen sind, wobei jeder Hebevorsprung neben einer Endseite der Umlenkrolle angeordnet ist und wenigstens im Bereich des zu vereinzelnden Bündels und der Mulde der zugelemente (3) den Umriß der Umlenkrolle und die Zugelemente mit einer von diesen unmittelbar abstehenden Anschlagfläche überragt und in Heberichtung der Zugelemente bewegbar ist, und daß die Anschlagflächen im Bereich der oberen horizontalen Tangente und die Umlenkrollen mit deren Umriß und/oder mit dem Zugelemente einen offenen Raum zur Aufnahme eines Stabes bilden

Beim Anziehen der Zugelemente und der damit vorzugsweise synchron erfolgenden gleichgerichteten Bewegung der Hebevorsprünge und ihrer Anschlagflächen wird somit ein Profil formschlüssig hintergriffen und zu der Vereinzelungsstelle hin angehoben, unabhängig davon, welche Querschnittsform es hat. Es kann dann von den Hebevorsprüngen bequem und sicher bis zu dem Transportmittel transportierbar sein, wobei ein Herabfallen aus größerer Höhe auf dieses Transportmittel dadurch vermieden wird, daß der Hebevorsprung und seine Anschlagfläche unmittelbar bis an die Umlenkrolle und auch unmittelbar bis an das weiterfördernde Transportmittel heranreichen kann. Es ergibt sich somit ein guter Übergang aus der Mulde zu dem Transportmittel, ohne daß das zu vereinzelnde Profil rollen können muß und ohne daß es zunächst über das Transportmittel gehoben und dann auf dieses herabfallen gelassen wird. Der überstand des Hebevorsprunges bzw. die Länge der von der Umlenkrolle bzw. dem Zugelement ausgehenden Anschlagfläche ist dabei zweckmäßigerweise etwa so groß wie die Querschnittsbreite oder -höhe der Stäbe oder etwas geringer, so daß beispielsweise ein rechteckiger Stab nur mit seiner kürzeren Querschnittslänge auf diesen Vorsprung paßt.

Da lediglich schmale Hebevorsprünge und Anschlagflächen vorgesehen sind, deren zwei mit Abstand zueinander einen Stab untergreifen, hat dieser eine statisch bestimmte Lage und außerdem kann dadurch die Verwendung einer entsprechend langen Vereinzelungswalze mit ihrem hohen Gewicht vermieden werden.

Eine besonders zweckmäßige Konstruktion ergibt sich dabei, wenn der Hebevorsprung dreh- oder schwenkbar ist und vorzugsweise koaxial zur Drehachse der Umlenkrolle, insbesondere auf deren Achse oder Welle gelagert ist. Auf diese Weise läßt sich die synchrone Bewegung des Anziehens der Zugelemente und des Anhebens des Hebevorsprunges ohne besondere zusätzliche Maßnahmen erreichen. Darüber hinaus ergibt sich so ein ständig gleichbleibender Überstand der Anschlagfläche des Hebevorsprunges gegenüber der Umlenkrolle bzw. dem darauf laufenden Zugelement.

Der Hebevorsprung, vorzugsweise die Segmentscheibe, kann hin- und herschwenkbar oder hin- und herdrehbar sein und dabei in Förderrichtung zumindest bis zu einem oberen Punkt der Umlenkrolle am Anfang des Transportmittels und auf gleicher Höhe mit diesem und dann wieder zurückbewegbar sein. Dadurch ist der zwangsweise und höhengleiche Übergang eines von den Hebevorsprüngen und deren Anschlagflächen erfaßten Profiles oder Stabes bis zu dem Transportmittel sichergestellt, so daß der Stab nicht auf das Transportmittel herabfallen muß. Gleichzeitig kann so bei entsprechender Wahl der Drehzahl der Umlenkrolle bzw. des weiterfördernden Transportmittels auch die Übergangsbewegung weitgehend ruckfrei und somit problemlos gestaltet werden.

In vorteilhafter Weise kann dabei der in Obenstellung befindliche Hebevorsprung gleichzeitig ein Abstandhalter zwischen dem angehobenen Stab und den zurückbleibenden Stäben sein. Der Hebevorsprung erfüllt somit eine Doppelfunktion, indem er einerseits einen zu vereinzelnden Stab erfaßt und zu dem weiterführenden Transportmittel zwangsweise befördert, während er gleichzeitig die übrigen Stäbe zurückhält und sie in einem solchen Abstand von dem Transportmittel mit seiner der Anschlagfläche abgewandten Fläche festhält, daß der Übergang gleichzeitig mehrere Profile oder Stäbe auf das Transportmittel verhindert wird und somit also wirklich nur ein vereinzeltes Profil von dem Transportmittel erfaßt werden kann.

Die hin- und herschwenkbare oder gegebenenfalls auch umlaufende Segmentscheibe kann ein Segment mit einem stumpfen Winkel von vorzugsweise 180° oder weniger freilassen, so daß auch in Obenstellung der fördernden Segmentkante bzw. Anschlagfläche der untere Teil der Segmentscheibe außerhalb des Zugelementes und der von ihm gebildeten Mulde bleibt.

Eine abgewandelte Ausführungsform kann darin bestehen, daß die Schwenklagerung des Hebevorsprunges zur Veränderung der Länge seines Überstandes während der Schwenkbewegung, insbesondere zur Verringerung dieser Länge bei der Verschwenkung nach oben, exzentrisch zu der Umlenkrolle angeordnet ist. Dadurch könnte beispielsweise ein hochkant und somit ungünstig stehendes Profil von dem im Bereich des oberen Totpunktes angeordneten Kontrollmittel oder Abweiser leichter erfaßt und zum Zurückkippen über die dann kürzere Anschlagfläche veranlaßt werden. Aber auch bei gleichbleibendem Überstand kann dieses Kontrollmittel oder ein Abweiser dafür sorgen, daß im Querschnitt hochkant ankommende Profile oder Stäbe wieder zurückkippen, so daß nur flachliegende Profile auf das Transportmittel gelangen.

In der Transportstrecke des Transportmittels kann ein Zählorgan, z.B. Endschalter mit Schaltfahne, angeordnet und mit der Hubbewegung des Zugelementes und der Vereinzelungsbewegung der Hebevorsprünge steuerungsmäßig derart verknüpft sein, daß der Hub- und Vereinzelungsvorgang so oft wiederholbar ist, bis ein Stab durch die Transportstrecke gelaufen ist. Erst dann kann zeitverzögert die Transportstrecke und der zum Vereinzeln dienende Hebevorsprung reversiert werden, so daß in evtl. unerwünschter Lage angeordnete Stäbe wieder in das Materialbündel zurückgelangen, wonach dann die nächste Vereinzelung beginnen kann.

Eine weitere Ausgestaltung der Erfindung zur sicheren Vereinzelung der einzelnen Stäbe mit vorzugsweise problematischem Querschnitt kann darin bestehen, daß zum Erfassen der Lage angestauter Stäbe ein Fotosensor od.dgl. vorgesehen ist, der die Hub- und Senkbewegung der Zugelemente in Verbindung mit der Bewegung der Vereinzelungs-Hebevorsprünge, also beispielsweise der Segmentscheiben, ansteuert, bis eine vorprogrammierte Werkstücklage erkennbar und die Bewegung der Zugelemente unterbrechbar sowie der Hebevorsprung zum Anheben eines Stabes zur Transportstrecke verschwenkbar sind. Dabei bleibt die Absicherung mit Hilfe eines Kontrollmittels oder Abweisers und der Zählorgane in der Transportstrecke ebenfalls wirksam.

Es sei noch erwähnt, daß bei der Vereinzelung von nicht selbstrollenden Stäben vor allem gegen Ende der Entleerung der Mulde, wenn sich nur noch relativ wenig Stäbe in dem zu vereinzelnden Bund oder Bündel befinden, Schwierigkeiten auftreten könnten, weil dann die Stäbe auch nicht mehr in den Bereich des Hebevorsprunges bzw. der Segmentscheibe gewälzt werden, wenn die Zugelemente angezogen werden.

Es ist deshalb zweckmäßig und vorteilhaft, wenn das feste Zugelement-Lager bzw. die der Vereinzelungsstelle abgewandte Befestigungsstelle des Zugelementes in Richtung zu den Umlenkrollen hin verstellbar ist. Auf diese Weise kann die von den Zugelementen gebildete Mulde nachträglich schmaler und tiefer gemacht werden. Wird nach einer solchen Verschmälerung die Umlenkrolle im Sinne eines Anziehens der Gurte betätigt, gelangen die Stäbe wieder genügend nahe zu dieser Umlenkrolle und vor allem in den Bereich der Vereinzelungs-Hebevorsprünge oder -Scheiben.

Eine besonders zweckmäßige Konstruktion kann dabei darin bestehen, daß ein das fixierte Ende des/der Zugelemente tragender Halteholm od.dgl. Gerüstteil um eine mit Abstand zu der Befestigungsstelle angeordnete, vorzugsweise bodennahe Achse in Richtung zu der Umlenkrolle hin verschwenkbar ist.

Eine weitere vorteilhafte Ausgestaltung der Erfindung insbesondere zur Anpassung an unterschiedliche Querschnittsabmessungen der Stäbe kann darin bestehen, daß zur Veränderung der Länge der Anschlagfläche der Hebevorsprung oder die Segmentscheibe relativ zu seiner sie tragenden Haltescheibe quer zur Schenkachse insbesondere mittels Langlöchern od.dgl. verschieb- und festlegbar sein kann.

Weitere zweckmäßige Ausgestaltungen der erfindungsgemäßen Vereinzelungsvorrichtung, insbesondere betreffend die Anordnung einer ersten Lichtschranke als Kontrollmittel am Übergang von der Umlenkrolle zur dem Transportmittel sowie eine zweite Lichtschranke im Verlauf dieses Transportmittels und ferner die Ausbildung des Zugelementes als Gurt oder als Kette und dabei die Lagerung der Umlenkrolle sind Gegenstand der Ansprüche 13 bis 16.

Die Vereinzelungsvorrichtung eignet sich für Bündel von Stäben nahezu bliebiger Querschnitte, wobei die Vorteile einer Vereinzelungsvorrichtung mit Zugelementen für runde Stäbe erhalten bleiben und durch nur geringfügige Zusatzmaßnahmen, insbesondere die Anordnung von im Bereich der Umlenkrollen und des Überganges zu einem Transportmittel bewegbaren oder schwenkbaren, relativ schmalen Hebevorsprüngen eine Vereinzelung von im Querschnitt rechteckigen oder auch sonstigen unrunden Profilen ermöglicht wird, wobei gerade die relativ schmalen Hebevorsprünge nach dem Erfassen der Profile und einer gewissen Hochschwenkung diese sicher untergreifen und weiterbefördern können. Da diese Anhebebewegung in ihrem obersten Punkt auf dem Niveau des weiterführenden Transportmittels endet, ergibt sich an dieser Stelle ein problemloser und für dieses Transportmittel schonender Übergang, bei dem außerdem die relative Lage des Querschnittes des Profiles erhalten bleibt, was bei einem Herabfallen des Profiles aus größerer Höhe nicht gewährleistet wäre.

Nachstehend sind Ausführungsbeispiele der Erfindung mit ihren ihr als wesentlich zugehörenden Einzelheiten anhand der Zeichnung noch näher beschrieben.

Es zeigt in zum Teil schematisierter Darstellung:

Fig. 1 eine Seitenansicht einer erfindungsgemäßen Vereinzelungsvorrichtung mit Blick auf die Stirnseiten der zu vereinzelnden Profile, wobei am Übergang einer Umlenkrolle zu einem weiterführenden Transportelement ein Abweiser vorgesehen ist.

Fig. 2 in vergrößertem Maßstab eine Gurt-Umlenkrolle mit dieser gegenüber vorstehendem Hebevorsprung zum Anheben eines einzelnen Profiles bis auf die Höhe eines Transportmittels sowie den in diesem Bereich angeordneten Abweiser,

Fig. 3 einen Schnitt durch die Gurt-Umlenkrolle und den koaxial dazu auf derselben Welle angeordneten Hebevorsprung mit schematisierter Darstellung des Antriebes der gemeinsamen Welle,

Fig. 4 eine der Fig. 1 entsprechende Seitenansicht, bei welcher jedoch anstelle des Abweisers am Übergang von dem Zugelement, z.B. einem Gurt oder einer Kette, auf das Transportmittel statt eines Abweisers eine Lichtschranke und im weiteren Verlauf des Transportmittels eine zweite Lichtschranke vorgesehen sind,

Fig. 5 eine der Fig. 2 entsprechende vergrößerte Darstellung der Umlenkrolle mit den beiden Lichtschranken gemäß Fig. 4,

Fig. 6 eine Seitenansicht einer Umlenkrolle, die in diesem Falle für ein als Kette ausgebildetes Zugelement als Taschenkettenrad ausgebildet ist und bei welcher das ablaufende, als Kette ausgebildete Zugelement in einen Speicher läuft,

Fig. 7 einen Teillängsschnitt der als Kettenrad ausgebildeten Umlenkrolle,

Fig. 8 einen Teilquerschnitt der als Kettenrad ausgebildeten Umlenkrolle sowie

Fig. 9 die koaxiale Anordnung der als Kettenrad ausgebildeten Umlenkrolle und des Hebevorsprunges, der dabei relativ zu der Antriebswelle der Umlenkrolle drehbar ist und einen eigenen Antrieb aufweist.

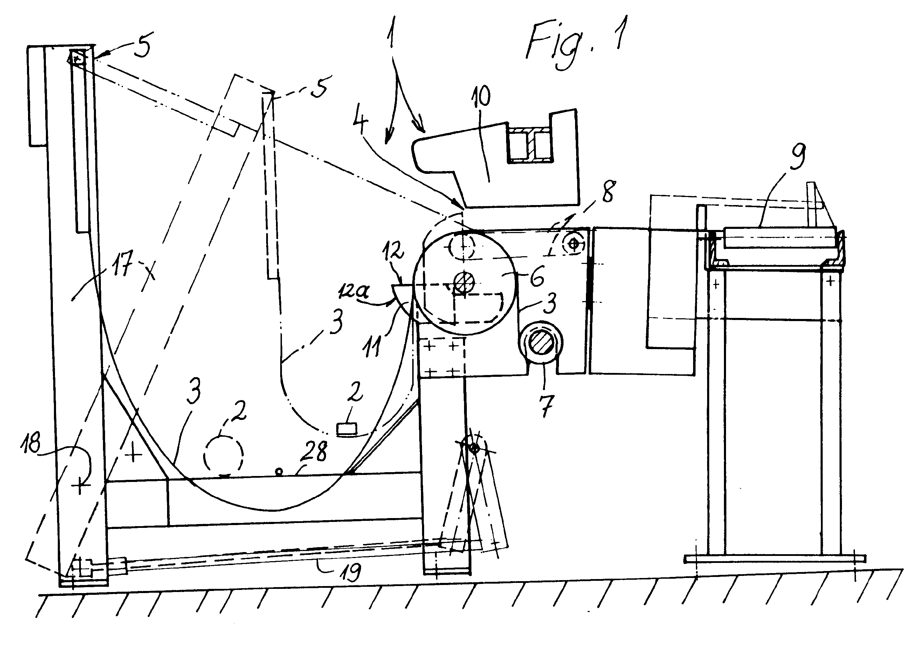

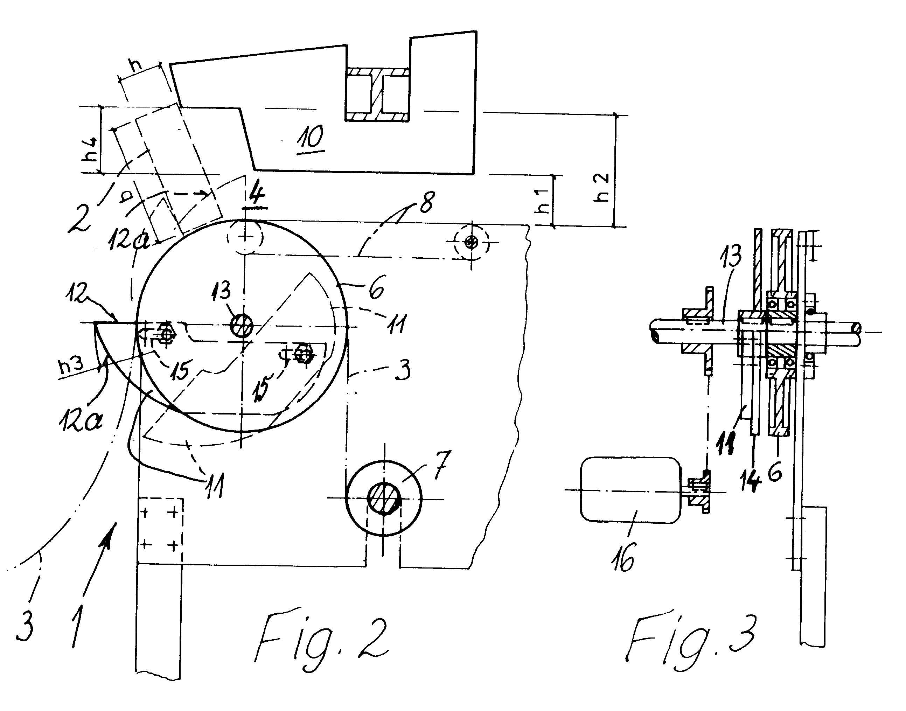

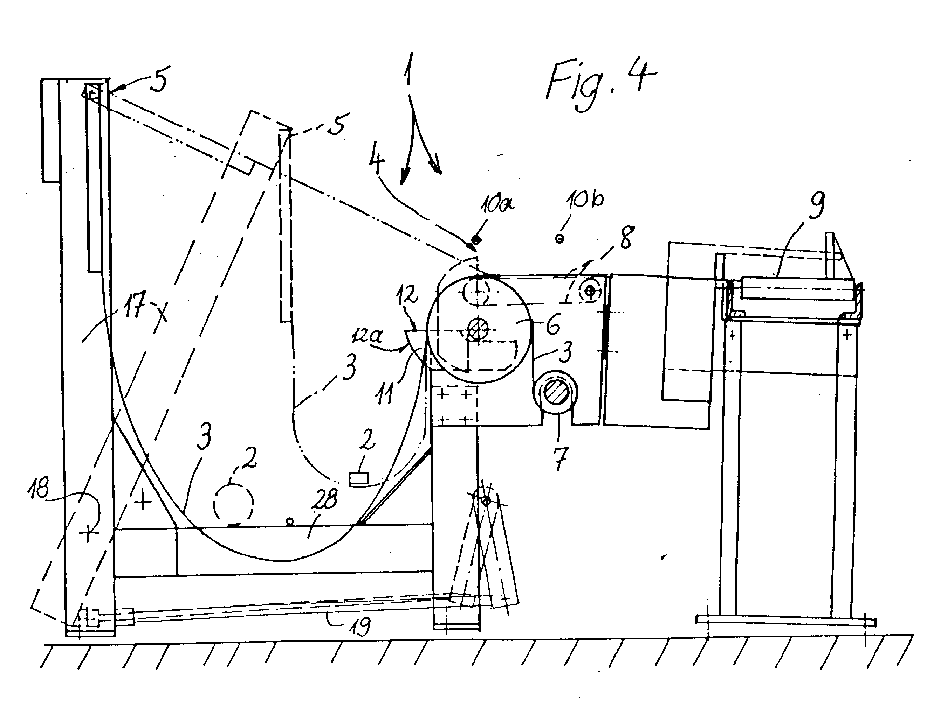

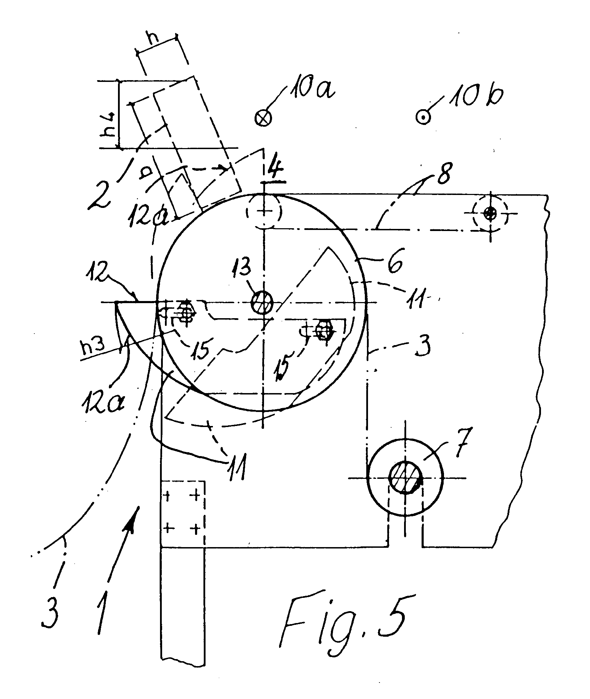

Eine in allen Ausführungsbeispielen jeweils mit 1 bezeichnete Vereinzelungsvorrichtung, deren einander entsprechende Teile auch jeweils mit demselben Bezugszeichen versehen werden, selbst wenn diese Einzelteile voneinander abweichen, wie dies z.B. bei den Zugelementen 3 der Fall ist, die entweder als Gurte oder als Ketten ausgebildet sein können und dann jeweils das Bezugszeichen 3 haben, dient zum Vereinzeln von in Bündeln oder Bunden zusammengefassten Stäben 2, die nahezu beliebige Querschnittsprofile haben können. In Fig. 1 ist einerseits ein Stab 2 mit kreisrundem Querschnitt, andererseits ein solcher mit rechteckigem Querschnitt und außerdem in Fig. 2 wiederum ein solcher Stab mit relativ großem recheckigem Querschnitt dargestellt, bei welchem die Querschnittsbreite b gegenüber der Querschnittshöhe h erheblich überwiegt. Die Vereinzelungsvorrichtung 1 weist parallele, muldenförmig durchhängende Gurte 3 auf, die aber auch andere Zugelemente, z.B. Seile oder Ketten sein könnten. Diese muldenförmig angeordneten Gurte 3 nehmen das jeweilige Bündel von Stäben 2 auf und sind an ihrem der Vereinzelungsstelle 4 abgewandten Ende 5 fixiert. Am Vereinzelungsende 4 sind die Gurte 3 in ihrer Orientierungsrichtung anziehbar und zwar im Ausführungsbeispiel über Umlenkrollen 6 auf Trommeln 7 aufwickelbar. Die durch die Gurte 3 gebildete Mulde kann also durch Anziehen und Aufwickeln der Gurte 3 verkleinert werden, wodurch das Bündel von Stäben 2 in ihr angehoben und damit auch näher an die Vereinzelungsstelle 4 herangebracht wird.

Im Bereich der Vereinzelungsstelle 4 beginnt ein Transportmittel 8, im Ausführungsbeispiel ein Endlos- oder Bandförderer, womit der jeweils vereinzelte Stab 2 von der Vereinzelungsstelle 4 abgeführt und beispielsweise einer Rollenbahn 9 zugeführt werden kann. Mit dem Abstand h1 über diesem Transportband 8 befindet sich ein Abweiser 10, mit welchem im Querschnitt zu große oder in Fehlstellung orientierte Stäbe 2 von dem Transportmittel 8 zurückgehalten werden, wie es in Fig. 2 gestrichelt angedeutet ist. Dort ist ein im Querschnitt rechteckiger Stab 2 zu der Vereinzelungsstelle 4 gelangt, steht dabei aber hochkant und paßt so nicht unter den Abweiser 10. In einer um 90° verdrehten Position hingegen wurde dieser Stab 2 unter den Abweiser 10 passen und könnte von dem Transportband 8 zu der Rollenbahn 9 befördert werden. So hingegen fällt er wieder in das Bündel zurück und kann erneut vereinzelt werden, bis er in dieser "richtigen" Position auf das Transportband 8 gelangt.

Um einen Stab 2 einzeln zu erfassen und an der Vereinzelungsstelle 4 aus der Gurtmulde auf das Transportmittel 8 zu befördern, ist neben den Gurt-Umlenkrollen 6 ein Finger, Schwenkhebel oder dergleichen Hebevorsprung, im Ausführungsbeispiel eine Segmentscheibe 11 vorgesehen, welche gemäß Fig. 1 und 2 im Bereich des zu vereinzelnden Bündels von Stäben 2 und der Gurtmulde den Umriß der Gurtumlenkrolle 6 und auch der jeweiligen Gurte 3 mit einer Anschlagfläche 12 überragt und in Heberichtung der Gurte 3 bewegbar ist. Mit dem Anheben der Gurte erfolgt also synchron auch die Bewegung der Anschlagfläche 12 nach oben, so daß ein von dieser erfaßter Profilstab 2 mitgenommen wird, wobei aber die Anschlagfläche 12 so kurz ist, daß sie nur Platz für einen einzigen Stab 2 bietet.

Im Ausführungsbeispiel ist der als Segmentscheibe ausgebildete Hebevorsprung dreh- oder schwenkbar und dabei koaxial zur Drehachse der Umlenkrolle 6 auf deren Achse oder Welle 13 gelagert. Damit ist die synchrone Hin- und Herbewegung oder Drehbewegung mit der Gurtumlenkrolle von selbst sichergestellt.

Vor allem in Fig. 2 ist gesrichtet dargestellt, daß dabei die hin- und herschwenkbare Anschlagfläche 12 in Förderrichtung bis zum oberen Totpunkt der Umlenkrolle 6, welcher Totpunkt sich am Anfang des Transportmittels 8 befindet, und dann wieder zurückbewegbar ist. Somit wird bei lagegerechter Beförderung eines Stabes 2 durch die Anschlagfläche 12 und die Segmentscheibe 11 ein solcher Profilstab 2 mit Sicherheit auf das Transportmittel 8 gebracht, so daß er von diesem übernommen werden kann.

Durch den Abweiser 10, der in seinem lichten Abstand h1 gegenüber der Oberseite des Transportmittels 8 auf die jeweilige Stärke der zu vereinzelnden Stäbe 2 einstellbar sein kann, wird dabei sichergestellt, daß nur ein einziger Stab 2 das Transportmittel 8 erreicht, so daß dann also die Vereinzelung durchgeführt ist.

Dabei zeigt Fig. 2 außerdem, daß der in Obenstellung befindliche Hebevorsprung bzw. die der Anschlagfläche 12 abgewandte Rückseite 12a der Segmentscheibe 11 gleichzeitig einen Abstandhalter zwischen dem angehobenen Stab 2 und den zurückbleibenden Stäben bildet. Selbst bei relativ stark angehobenem Gurt 3 gegen Ende der Vereinzelung, wenn in der Gurtmulde nur noch sehr wenig Stäbe 2 sind, kann somit nicht unabsichtlich ein weiterer Stab auf das Transportmittel 8 rutschen.

Die im Ausführungsbeispiel dargestellte Segmentscheibe 11 mit gegenüber der Gurt-Umlenkrolle 6 überstehendem Anschlag 12 läßt ein Segment mit stumpfem Winkel, im Ausführungsbeispiel ein solches mit einem Winkel von 180° frei und auch in ihrer Obenstellung gelangt die untere Scheibenkante nicht über den Gurt 3 hinaus in die Gurtmulde.

In Fig. 2 erkennt man, daß zur Veränderung der Länge der Anschlagfläche 12 der als Segmentscheibe 11 ausgebildete Hebevorsprung relativ zu einer Haltescheibe 14 quer zu seiner Schwenkachse, im Ausführungsbeispiel der Welle 13, mittels Langlöchern 15 verschieb- und festlegbar ist. Dadurch ist eine Einstellung auf Stäbe unterschiedlicher Querschnittsmaße auf einfache Weise möglich. Gegebenenfalls könnte auch die Schwenklagerung des Hebevorsprunges zur Veränderung der Länge des Überstandes der Anschlagfläche 12 während der Schwenkbewegung, insbesondere zur Verringerung dieser Länge bei der Verschwenkung nach oben, exzentrisch zu der Welle 13 angeordnet sein, um ein gemäß Fig. 2 hochkant und somit ungünstig stehendes Profil leichter von dem Abweiser 10 wieder zum Zurückkippen über diesen Überstand hinweg in die Gurtmulde veranlassen zu können. Im Ausführungsbeispiel ist jedoch eine solche exzentrische Anordnung zugunsten einer einfacheren Antriebsmechanik mit Hilfe einer einzigen Welle 13 und eines Motors 16 nicht vorgesehen.

Es sei noch erwähnt, daß in der Transportstrecke des Transportmittels 8 in nicht näher dargestellter Weise ein Zählorgan, z.B. ein Endschalter mit Schaltfahne angeordnet und mit der Hubbewegung des Gurtes 3 und der Vereinzelungsbewegung der Hebevorsprünge bzw. Segmentscheiben 11 derart steuerungsmäßig verknüpft sein kann, daß der Hub- und Vereinzelungsvorgang so oft wiederholt bzw. reversiert wird, bis ein Stab 2 durch die Transportstrecke gelaufen ist. Nach dem Durchlauf eines Stabes 2 kann dann zeitverzögert die Transportstrecke und die Vereinzelungsscheibe 11 reversiert werden, so daß ein Stab 2, welcher sich in unerwünschter Lage befindet, wieder in den Materialbund zurückgelangt.

Da der Anschlagvorsprung 12 jeweils einen Stab formschlüssig unterfassen und zu der Vereinzelungsstelle 4 und dem Transportmittel 8 anheben kann, braucht der Gurt 3 nicht bis zum sogenannten Überlauf hochgehoben werden, was bei runden Stäben zweckmäßig ist, so daß nicht die Gefahr besteht, daß größere Teile des Bundes, insbesondere mehrere Stäbe auf einmal über die Gurtumlenkrolle 6 rutschen und am Eintritt des Abweisers 10 eine Verkeilung bewirken.

Zum Erfassen der Lage der angestauten Stäbe 2 kann ein ebenfalls nicht näher dargestellter Fotosensor vorgesehen sein, der die Gurthub- und -senkbewegung in Verbindung mit der Bewegung der Vereinzelungs-Hebevorsprünge steuert, bis eine vorprogrammierte Lage der einzelnen Stäbe 2 erkannt ist und dann die Bewegung der Gurte 3 unterbrochen und der Hebevorsprung zum Anheben eines Stabes zur Transportstrecke verschwenkt wird.

Damit auch gegen Ende der Entleerung der Gurtmulde die noch in ihr befindlichen Stäbe 2 mit Sicherheit in den Bereich der Segmentscheibe 11 gelangen, um ebenfalls vereinzelt werden zu können, ist im Ausführungsbeispiel gemäß Fig. 1 vorgesehen, daß die Gurtmulde dadurch verkleinert werden kann (vgl. strichpunktierte Darstellung des Gurtes 3), daß das feste Gurtlager 5 in Richtung zu den Umlenkrollen 6 hin verstellbar ist. Dadurch wird die Gurtmulde in der dargestellten Weise schmaler und zunächst auch tiefer, was aber durch ein stärkeres Aufwickeln des Gurtes auf die Trommeln 7 ausgeglichen werden kann, so daß letztlich die Gurtmulde nicht nur schmaler, sondern auch höher eingestellt werden kann. Bei einem weiteren Betätigen der Umlenkrolle kann dann wiederum das Anheben und Vereinzeln der Stäbe 2 in der vorbeschriebenen Weise mit Hilfe der Segmentscheibe 11 und dem Anschlagvorsprung 12 erfolgen.

Die Bewegung des festen Gurtlagers 5 erfolgt im Ausführungsbeispiel dadurch, daß ein dieses fixierte Ende 5 der Gurte 3 tragender Halteholm 17 um eine mit Abstand zu der Befestigungsstelle 5 angeordnete, im Ausführungsbeispiel bodennahe Achse 18 in Richtung zu der Umlenkrolle 6 hin verschwenkbar ist. Dies kann mit Hilfe eines Gestänges 19 erfolgen, womit auch die Schwenkstellung jeweils festlegbar ist.

In Fig. 1 ist außerdem bei vertikal stehendem Halteholm 17 strichpunktiert dargestellt, daß zum Vereinzeln von im Querschnitt runden Stäben 2 nach wie vor so gearbeitet werden kann, daß der Gurt 3 mittels der Umlenkrolle 6 und der Trommel 7 straff gespannt wird, wobei das fixierte Ende 5 höher als die Vereinzelungsstelle 4 liegt, so daß solche runden Stäbe selbsttätig zu der Vereinzelungsstelle 4 rollen können. Die erfindungsgemäße Vereinzelungsvorrichtung 1 ist auf diese Weise dazu geeignet, in bisheriger Form runde Stäbe zu vereinzeln, mit Hilfe der gegenüber der Umlenkrolle 6 vorstehenden Segmentscheibe 11 aber auch Stäbe mit unrundem Querschnitt aus einem Materialbündel zu erfassen und zu vereinzeln.

Praktisch bildet an der Vereinzelungsstelle 4 das horizontale Obertrum des Transportmittels 8 die Tangente an die Umlenkrolle 6 bzw. das dort umgelenkte Zugelement 3, ein Gurt oder eine Kette, so daß ein nahtloser und stufenloser Übergang eines von der Anschlagfläche 12 der Segmentscheibe 11 angehobenen Profiles oder Stabes 2 auf das Transportmittel 8 erfolgen kann und ein Herabfallen des Stabes 2 aus größerer Höhe auf ein weiterführendes Transportmittel 8 vermieden wird.

Beim Ausführungsbeispiel nach Fig. 4 und 5 besteht weitestgehende Übereinstimmung zum Ausführungsbeispiel nach Fig. 1 bis 3, jedoch ist statt eines Abweisers 10 im Bereich der Vereinzelungsstelle 4, also im Bereich der Obenstellung der Segmentscheibe 11 und ihrer Anschlagfläche 12 ein auf das Vorhandensein und die Lage des Stabes 2 und seines Querschnittes ansprechender Sensor, im Ausführungsbeispiel eine erste Lichtschranke 10a vorgesehen. Diese steuert den Antrieb der Segmentscheibe 11, des Zugelementes 3 und gegebenenfalls auch des Transportmittels 8 an und kann bei Fehlstellungen des Stabes 2 die Dreh- oder Förderrichtung umkehren. Wird also ein vereinzelter Stab 2 nicht richtig oder nicht in der richtigen Lage erfaßt, so daß er beispielsweise hochkant auf das Transportmittel 8 gelangen würde, obwohl er flachliegen soll, wird dies von der Lichtschranke 10a bemerkt und dieser Stab durch eine umgekehrte Transportrichtung wieder in die Mulde befördert.

In Förderrichtung des weiterfördernden Transportmittels 8, also eines Querförderers, mit Abstand zu dieser ersten Lichtschranke 10a ist im Ausführungsbeispiel nach Fig. 4 und 5 eine zweite Lichtschranke 10b zum Umsteuern der Transportrichtung des Transportmittels 8 bei Fehlpositionen oder Stau der Stäbe 2 vorgesehen. Hat beispielsweise ein Stab 2 zwar die Lichtschranke 10a passieren können, stauen sich aber am Transportmittel 8 zu viele Stäbe, wird dies durch die Lichtschranke 10b bemerkt, so daß wiederum die Transportrichtung umgesteuert und die inzwischen in zu großer Anzahl angelangten Stäbe 2 in die Mulde zurückbefördert werden können.

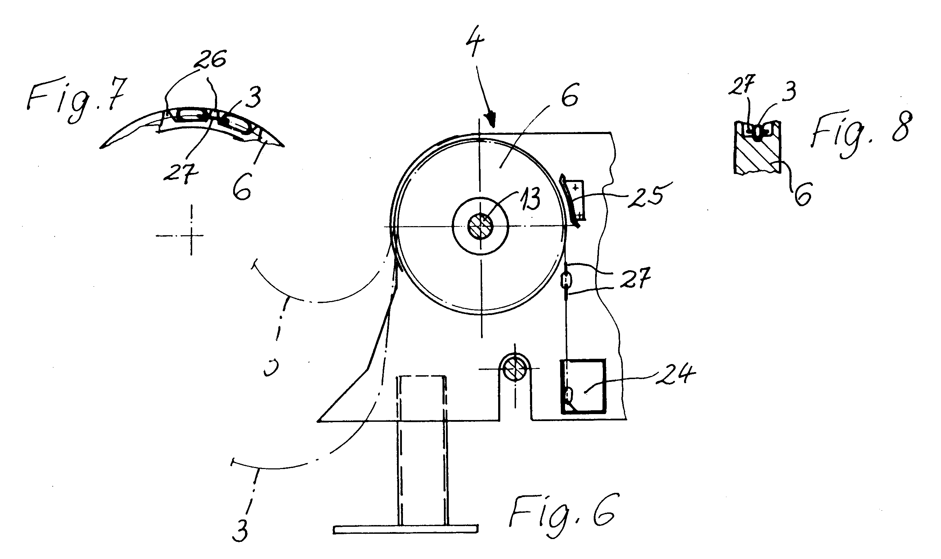

Sowohl im Ausführungsbeispiel nach Fig. 1 bis 3 als auch in dem Ausführungsbeispiel nach Fig. 4 und 5, für welches die Darstellung der Fig. 3 in gleicher Weise gilt, ist die Umlenkrolle 6 jeweils drehbar auf der Antriebswelle 13 der Segmentscheiben 11 gelagert. Die Zugelemente 3 sind dabei bevorzugt Gurte, die auf hinter dem Gurtablauf der Umlenkrollen 6 gelagerte Trommeln 7 gewickelt werden, so daß der Antrieb dieser Trommel 7 die Verkleinerung und Vergrößerung der Mulde und auch die Drehung der Umlenkscheibe 6 bewirkt.

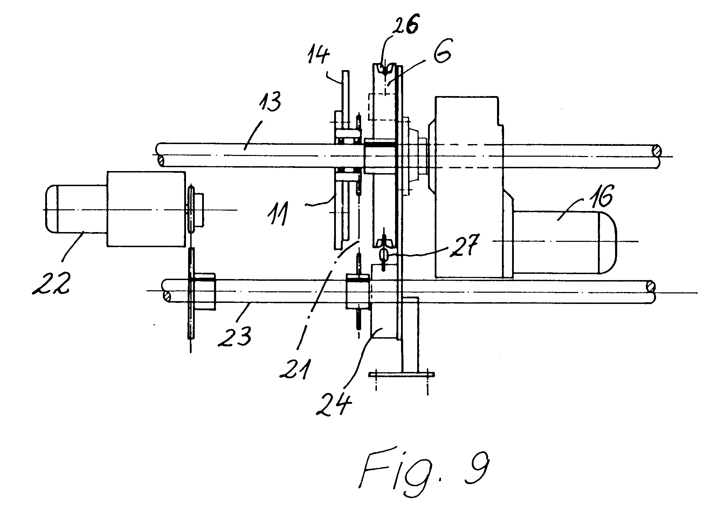

Die Zugelemente 3 können jedoch, wie bereits erwähnt wurde, auch Ketten sein, was in den Figuren 6 bis 9 verdeutlicht ist. Sind die Zugelemente 3 Ketten, insbesondere Rundgliederketten, dienen als deren Antriebs- und Umlenkrollen 6 die vor allem in Fig. 7 und 8 verdeutlichten Taschenkettenräder. Gemäß Fig. 9 sind diese als Taschenkettenräder ausgebildeten Umlenkrollen 6 drehfest auf der Welle 13 gelagert, die von dem Motor 16 angetrieben wird. Die Segmentscheiben 11 und die mit ihnen verbundenen Haltescheiben 14 haben in diesem Falle einen eigenen Antrieb, beispielsweise einen Ketten- oder Zahnriementrieb 21, der über eine Vorgelegewelle 23 mit einem entsprechenden Antriebsmotor 22 in Verbindung steht. Die Segmentscheiben 11 und Haltescheiben 14 sind in diesem Falle drehbar auf der Antriebswelle 13 der Umlenkrollen gelagert. Zwar wäre auch eine umgekehrte Anordnung möglich, jedoch läßt sich auf diese Weise die Vereinzelungsvorrichtung auch als eine solche für Rundmaterial verwenden, bei welchem auf die Segmentscheibe 11 mit den Anschlagvorsprüngen 12 und somit auch diese Antriebseinheit 21, 22 und 23 verzichtet werden kann, während alle übrigen Elemente beibehalten bleiben können. Somit stellt diese Anordnung, die auch bei der Verwendung von Gurten als Zugelemente 3 benutzt werden könnte, eine besonders zweckmäßige Ausgestaltung dar.

Da in diesem Falle die Umlenkrolle 6 die Antriebskraft für das als Kette ausgebildete Zugelement 3 erzeugt, bedarf es keiner Trommel 7, sondern die Kette kann am Ablauf der Umlenkrolle 6 in einen Speicher 24 einlaufen. Am Ablauf der Umlenkrolle 6 und Übergang in den Speicher 24 ist noch ein Führungschuh 25 (vgl. Fig. 6) vorgesehen, um die Kette 3 sicher mit der Umlenkscheibe 6 in Verbindung zu halten. In Fig. 7 erkennt man, wie dabei Zähne 26 jeweils in flachliegende Glieder 27 der Kette eingreifen.

Die Wirkungsweise der Vereinzelungsvorrichtung 1 bei Flach- und Vierkantmaterialien, die schwer zu vereinzeln sind, ist folgende:

Das Bündel von Stäben 2 wird in die Mulde eingelegt, wobei die Zugmittel 3 ganz abgelassen sind, so daß die Mulde so groß wie möglich ist und die Stäbe auf einem metallischen Muldenkörper 28 zu liegen kommen. Somit werden in dieser Phase die Zugelemente 3 nicht beaufschlagt und keiner Beschädigungsgefahr ausgesetzt.

Wird die Vorrichtung 1 automatisch oder durch ein Startsignal in Gang gesetzt, wird das Materialbündel von den Zugelementen 3 angehoben, bis ein in der Zeichnung nicht näher dargestellter, an sich bekannter Initiator vor den Umlenkrollen 6 meldet, daß Stäbe 2 vorhanden sind. Nunmehr wird die Vereinzelungs- bzw. Segmentscheibe 11 in Gang gesetzt und entnimmt mit ihrem Anschlagvorsprung 12 einen oder auch mehrere Stäbe 2 und fördert diese über die Umlenkrolle 6 nach oben. Die erste Lichtschranke 10a prüft, ob Materialteile oder Stäbe 2 die Lichtschranke unterbrechen, was dann der Falle ist, wenn Material falsch in der Höhe liegt oder verklemmt, verschränkt ist oder übereinanderliegt. Erfolgt ein solches Ansprechen der Lichtschranke 10a, wird die Segmentscheibe 11 bzw. der Finger oder Hebevorsprung zu einer Rückwärtsbewegung in seine Grundstellung veranlaßt.

Auch das Materialbündel wird durch eine kurze Rückwärtsbewegung der Zugelemente 3 etwas abgelassen. Das weiterführende Transportmittel 8 kann jedoch bei dieser Situation noch in seiner normalen Transportrichtung weiterlaufen.

Erst wenn zusätzlich auch die zweite Lichtschranke 10b anspricht, die mit Abstand zu der ersten Lichtschranke 10a angeordnet ist, wird auch die Transportrichtung des Obertrums des Fördermittels 8 umgekehrt.

Dabei wird die Vereinzelungsscheibe 11 ebenfalls - falls sie es nicht schon ist - in ihre Grundstellung zurückgedreht und das Materialbündel abgelassen, bevorzugt bis in seine Grundstellung, in der die Zugelemente 3 locker sind.

Danach wird nun der Vorgang von vorne begonnen, d.h. die Stäbe 2 werden gehoben und die Segmentscheibe 11 in der schon beschriebenen Weise in Gang gesetzt.

Zusätzlich ist in den Ablauf eine Zählüberprüfung für die Segmentscheibe 11 eingebaut. Wird diese betätigt und meldet daraufhin der in der Transportstrecke des Transportmittels 8 eingebaute Endschalter keinen Materialdurchlauf, so erkennt die Automatik, daß kein Stab 2 nach oben befördert wurde. Die Kontrolle über den Endschalter in der Quertransportstrecke ist mit der Kontrolle der Vereinzelungsscheibe 11 für die Obenstellung gekoppelt. Sollte dieser Vereinzelungsvorgang mehrere Male, beispielsweise dreimal, ohne Materialtransport, d.h. ohne Materialerkennung durch Endschalter im Quertransport des Transportmittels 8 durchgeführt worden sein, kann die Vereinzelungseinheit, d.h. vor allem das Bündel der Stäbe 2 wiederum durch die Zugelemente 3 nach unten abgelassen werden und die Vereinzelungsscheibe 11 wird ebenfalls in ihre untere Ausgangsstellung bewegt. Danach kann die beschriebene Vereinzelung wiederum von vorne beginnen. Dies kann wieder mehrmals, z.B. dreimal wiederholt werden und falls dann diese Vereinzelung immer noch erfolglos ist, kann die Automatik der Maschine selbsttätig auf Handbetrieb umgeschaltet werden.

Ein erheblicher Vorteil der erfindungsgemäßen Vereinzelungsvorrichtung 1 besteht dabei darin, daß auch einfacher zu vereinzelnde Stäbe 2, z.B. Rundmaterial, vereinzelt werden kann.

Das Einlegen des Bündels geschieht dabei wie bei Flachmaterial. Sodann wird das Bündel durch die Zugelemente 3 angehoben, bis in diesem Falle die erste Lichtschranke 10a unmittelbar an dem Vereinzelungspunkt 4 und der Umlenkrolle 6 einen Stau von Stäben 2 meldet. In dieser Situation ist davon auszugehen, daß,Rundmaterial über die horizontale Vereinzelungsstrecke und vor allem das Transportmittel 8 gelaufen ist. In diesem Falle wird nun einfach ein weiteres Anheben der Zugelemente 3 beendet. Das Rundmaterial kann in diesem Falle über die Querförderstrecke in einen schrägen Lagerteil eines Magazines weiterlaufen.

Wird kein Stau von der zweiten Lichtschranke 10b gemeldet, läuft danach das automatische Vereinzeln der Rundstäbe 2 durch die Quertransportstreche aus dem vorne anstehenden und gestauten Bund weiter, bis die beiden Endschalter - einer im Bereich des Transportmittels 8, einer im schrägen Magazinteil - Belegung melden, d.h. bis das Magazin voll belegt ist. Danach wird der Materialbund durch Absenken der Zugelemente 3 wieder in Grundstellung gebracht und der Vereinzelungsvorgang kann von neuem beginnen, wenn der Endschalter in der Quertransportstrecke meldet, daß diese nun wieder leer ist.

Bei Meldung der zweiten Lichtschranke 10b über Störungen, z.B. einen Stau im Bereich der zweiten Lichtschranke, wird das Materialbündel durch Absenken der Zugelemente 3 in die Ausgangsstellung zurückgefahren und das querfördernde Transportmittel 8 in seiner Transportrichtung umgekehrt, so daß evtl. übereinanderliegende, verschränkte oder obenliegende Stäbe 2 zurücktransportiert werden.

In diesem Falle kann also der Arbeitsablauf dadurch etwas vereinfacht werden, daß die runden Stäbe 2 durch die Gurte 3 so hochgehoben werden können, daß schon dadurch der Vereinzelungspunkt 4 erreicht werden kann.

## Patentansprüche

1. Vereinzelungsvorrichtung (1) für Bündel von Stäben (2), insbesondere mit unrundem Querchnitt, mit in parallelen Ebenen muldenförmig durchhängenden Gurten (3), Ketten oder dergleichen Zugelementen zur Aufnahme des Bündels, welche Zugelemente (3) an ihrem der Vereinzelungsstelle (4) abgewandten, insbesondere höher befindlichen Ende (5) fixiert und an der Vereinzelungsstelle (4) in ihrer Orientierungsrichtung über Umlenkrollen (6) und/oder Trommeln (7) anziehbar, z.B. auf Trommeln (7) aufwickelbar und wieder abwikkelbar sind, wobei im Bereich der Vereinzelungsstelle (4) ein Transportmittel (8) zum Abführen des vereinzelten Stabes (2) und mit Abstand darüber ein Kontrollmittel zum Zurückweisen von im Querschnitt zu großen oder in einer Fehlstellung orientierten Stäben (2) vorgesehen sind,
**dadurch gekennzeichnet**, daß zwei - in Richtung der Achse der Umlenkrolle (6) schmale - Hebevorsprünge, z.B. Finger, Segment Scheiben (11) oder Schwenkhebel vorgesehen sind, wobei jeder Hebevorsprung neben einer Endseite der Umlenkrolle angeordnet ist und wenigstens im Bereich der zu vereinzelnden Bündels und der Mulde der Zugelemente (3) den Umriß der Umlenkrolle (6) und die Zugelemente (3) mit einer von diesen unmittelbar abstehenden Anschlagfläche (12) überragt und in Heberichtung der Zugelemente (3) bewegbar ist, und daß die Anschlagflächen (12) im Bereich der oberen horizontalen Tangente an die Umlenkrolle (6) mit deren Umriß und/oder mit dem Zugelement (3) einen offenen Raum zur Aufnahme eines Stabes (2) bilden.

2. Vorrichtung nach Anspruch 1, dadurch gekennzeichnet, daß der Hebevorsprung mit der Anschlagfläche (12) dreh- oder schwenkbar ist und vorzugsweise koaxial zur Drehachse der Umlenkrolle (6) insbesondere auf deren Achse oder Welle (13) gelagert ist.

3. Vorrichtung nach Anspruch 1 oder 2, dadurch gekennzeichnet, daß der Hebevorsprung, vorzugsweise die Segmentscheibe (11) hin- und herschwenkbar oder hin- und herdrehbar ist und dabei in Förderrichtung zumindest bis zu einem oberen Punkt der Umlenkrolle (6) am Anfang des Transportmittels (8) und auf dessen Höhe und dann wieder zurückbewegbar ist.

4. Vorrichtung nach einem der Ansprüche 1 bis 3, dadurch gekennzeichnet, daß der in Obenstellung befindliche Hebevorsprung gleichzeitig ein Abstandhalter zwischen dem angehobenen Stab (2) und den zurückbleibenden Stäben (2) ist.

5. Vorrichtung nach einem der Ansprüche 1 bis 4, dadurch gekennzeichnet, daß die Segmentscheibe (11) ein Segment mit stumpfem Winkel von vorzugsweise 180° frei läßt und bei Obenstellung der fördernden Segmentkante oder Anschlagfläche (12) der untere Teil der Segmentscheibe (11) außerhalb des Zugelementes (3) und der von ihm gebildeten Mulde bleibt.

6. Vorrichtung nach einem der Ansprüche 1 bis 5, dadurch gekennzeichnet, daß die Schwenklagerung des Hebevorsprunges zur Veränderung der Länge des Überstandes der Anschlagfläche (12) während der Schwenkbewegung, insbesondere zur Verringerung dieser Länge bei der Verschwenkung nach oben, exzentrisch zu der der Umlenkrolle (6) angeordnet ist.

7. Vorrichtung nach einem der Ansprüche 1 bis 6, dadurch gekennzeichnet, daß in der Transportstrecke des Transportmittels (8) ein Zählorgan, z.B. Endschalter mit Schaltfahne, angeordnet und mit der Hubbewegung des Zugelementes (3) und der Vereinzelungsbewegung der Hebevorsprünge steuerungsmäßig derart verknüpft ist, daß der Hub- und Vereinzelungsvorgang so oft wiederholbar ist, bis ein Stab (2) durch die Transportstrecke gelaufen ist.

8. Vorrichtung nach einem der Ansprüche 1 bis 7, dadurch gekennzeichnet, daß zum Erfassen der Lage der angestauten Stäbe (2) ein Fotosensor od.dgl. vorgesehen ist, der die Hub- und Senkbewegung der Zugelemente (3) in Verbindung mit der Bewegung der Vereinzelungs-Hebevorsprünge (Segmentscheiben 11) ansteuert, bis eine vorprogrammierte Werkstücklage erkennbar und die Bewegung der Zugelemente (3) unterbrechbar sowie der Hebevorsprung zum Anheben eines Stabes (2) zur Transportstrecke (8) verschwenkbar sind.

9. Vorrichtung nach einem der Ansprüche 1 bis 8, dadurch gekennzeichnet, daß das feste Zugelement-Lager bzw. die der Vereinzelungsstelle (4) abgewandte Befestigungsstelle (5) des Zugelementes (3) in Richtung'zu den Umlenkrollen (6) hin verstellbar ist.

10. Vorrichtung nach einem der Ansprüche 1 bis 9, dadurch gekennzeichnet, daß ein das fixierte Ende (5) des/der Zugelemente (3) tragender Halteholm (17) od.dgl. Gerüstteil um eine mit Abstand zu der Befestigungsstelle (5) angeordnete, vorzugsweise bodennahe Achse (18) in Richtung zu der Umlenkrolle (6) hin verschwenkbar ist.

11. Vorrichtung nach einem der vorstehenden Ansprüche, dadurch gekennzeichnet, daß zur Veränderung der Länge der Anschlagfläche (12) der Hebevorsprung oder die Segmentscheibe (11) relativ zu einer sie tragenden Haltescheibe (14) quer zur Schwenkachse (13) insbesondere mittels Langlöchern (15) od.dgl. verschieb- und festlegbar ist.

12. Vorrichtung nach einem der Ansprüche 1 bis 11, dadurch gekennzeichnet, daß die Länge des Überstandes bzw. der Anschlagfläche (12) gegenüber dem Zugelement (3) etwa der Querschnittsbreite (b) oder -höhe (h) der Stäbe (2) oder weniger entspricht.

13. Vorrichtung nach einem der Ansprüche 1 bis 12, dadurch gekennzeichnet, daß im Bereich der Obenstellung der Segmentscheibe (11) und ihrer Anschlagfläche (12) ein auf das Vorhandensein und die Lage des Stabes (2) und seines Querschnittes ansprechender Sensor, vorzugsweise eine Lichtschranke, (10a)gegebenenfalls ein Abweiser, vorgesehen ist, der den Antrieb der Segmentscheibe,(11) des Zugelementes (3) und-/oder des Transportmittels (8) ansteuert und bei Fehlstellungen des Stabes die Dreh- oder Förderrichtung umkehrt.

14. Vorrichtung nach einem der Ansprüche 1 bis 13, dadurch gekennzeichnet, daß in Förderichtung des weiterfördernden Transportmittels (8), vorzugsweise eines Querförderers,mit Abstand zu der ersten Lichtschranke (10a) eine zweite Lichtschranke (10b) od. dgl.Sensor zum Umsteuern der Transportrichtung des Transportmittels (8) bei Fehlpositionen oder Stau der Stäbe (2) vorgesehen ist.

15. Vorrichtung nach einem der Ansprüche 1 bis 14, dadurch gekennzeichnet, daß die Umlenkrolle (6) drehbar auf der Antriebswelle (13) der Segmentscheiben (11) gelagert ist und daß die Zugelemente (3) vorzugsweise Gurte sind, die insbesondere auf hinter dem Gurtablauf der Umlenkrollen (6) gelagerte Trommeln (7) gewickelt sind.

16. Vorrichtung nach einem Ansprüche 1 bis 14, dadurch geeknnzeichnet, daß die Zugelemente (3) Ketten, insbesondere Rundgliederketten, sind, deren Antriebs- und Umlenkrollen (6) Taschenkettenräder sind, und daß die mit einem eigenen Antrieb, z.B. einem Ketten- oder Zahnriementrieb (21),versehenen Segmentscheiben (11) drehbar auf der Antriebswelle (13) der Umlenkrollen (6) gelagert sind.

## Claims

1. A separating device (1) for bundles of rods (2), particularly ones of noncircular cross section, including belts (3), chains or like drawing elements sagging in a trough shape in parallel planes and serving to receive the bundle, which drawing elements (3) are fixed at their particularly higher end (5) averted from the separating point (4) and at the separating point (4) are adapted to be drawn tighter in their direction of orientation by way of deflection pulleys and/or drums (7), e.g. are adapted to be wound onto drums (7) and off again, in the area of the separating point (4) a conveying means (8) being provided for carrying away the separated rod (2) and spaced overhead a checking means for rejecting rods (2) which are too large in cross section or are oriented-in an incorrect position,
**characterized** in that two lifting projections - narrow in the direction of the axis of the deflection pulley (6) - e.g. fingers, segmental discs (11) or swivelling levers are provided, each lifting projection being arranged beside an end side of the deflection pulley, at least in the area of the bundle to be separated and the trough of the drawing elements (3) each lifting projection projecting beyond the contour of the deflection pulley (6) and the drawing elements (3) with a butting face (12) protruding directly therefrom and being movable in the elevating direction of the drawing elements (3), and that in the area of the upper horizontal tangent to the deflection pulleys (6) the butting faces (12) form together with the contour of said pulleys and/or together with the drawing element (3) an open space for receiving a rod (2).

2. A device as clawed in claw 1, characterized in that the lifting projection with the butting face (12) is adapted to rotate or swivel and is preferably mounted coaxially to the axis of rotation of the deflection pulley (6), particularly on the spindle or shaft (13) thereof.

3. A device as clawed in claw 1 or claw 2, characterized in that the lifting projection, preferably the segmental disc (11), is adapted to swivel or rotate to and fro and in so doing is movable in the conveying direction at least to an upper point of the deflection pulley (6) at the beginning of and on a level with the conveying means (8) and then back again.

4. A device as clawed in any one of claws 1 to 3, characterized in that the lifting projection situated in the top position is simultaneously a spacer between the raised rod (2) and the rods (2) remaining behind.

5. A device as clawed in any one of claws 1 to 4, characterized in that the segmental disc (11) leaves free a segment with an obtuse angle of preferably 180° and in the top position of the conveying segment edge or butting face (12) the lower part of the segmental disc (11) remains outside the drawing element (3) and the trough it forms.

6. A device as clawed in any one of claws 1 to 5, characterized in that to change the length of the projection of the butting face (12) during the swivel movement, particularly to reduce said length in the upward swivel, the swivel support of the lifting projection is arranged eccentrically to that of the deflection pulley (6).

7. A device as claimed in any one of claims 1 to 6, characterized in that a counter, e.g. limit switch with switching lug,is arranged in the conveying path of the conveying means (8) and is linked control-wise to the elevating movement of the drawing element (3) and to the separating movement of the lifting projections in such a way that the elevating and separating operation is repeatable so many times until a rod (2) has travelled through the conveying path.

8. A device as claimed in any one of claims 1 to 7, characterized in that for detecting the position of the accumulated rods (2) a photo-sensor or the like is provided, controlling the elevating and lowering movement of the drawing elements (3) in conjunction with the movement of the lifting projections (segmental discs 11) until a preprogrammed workpiece position is detectable and the movement of the drawing elements (3) can be interrupted and the lifting projection can be swung to raise a rod (2) to the conveying path (8).

9. A device as claimed in any one of claims 1 to 8, characterized in that the fixed support of the drawing element, or that fastening location (5) of the drawing element (3) which is averted from the separating point (4),is adjustable in a direction towards the deflection pulleys (6).

10. A device as claimed in any one of claims 1 to 9, characterized in that a holding beam (17) or like frame member carrying the fixed end (5) of the drawing element(s) is adapted to swivel in a direction towards the deflection pulley (6) about an axis (18) arranged in spaced relationship to the fastening point (5), preferably about an axis near the ground.

11. A device as claimed in any one of the preceding claims, characterized in that to change the length of the butting face (12) the lifting projection or segmental disc (11) is displaceable and arrestable relative to a holding disc (14) carrying it and transversely to the swivel axis (13), particularly by means of oblong holes (15) or the like.

12. A device as claimed in any one of claims 1 to 11, characterized in that the length of the projection or of the butting face (12) relative to the drawing element (3) corresponds approximately to the cross-sectional width (b) or cross-sectional height (h) of the rods (2) or less.

13. A device as claimed in any one of claims 1 to 12, characterized in that in the area of the top position of the segmental disc (11) and butting face (12) thereof there is a sensor provided, preferably a light barrier (10a), possibly a guard, responsive to the presence and position of the rod (2) and the cross section thereof, said sensor controlling the drive of the segmental disc (11), of the drawing element (3) and/or of the conveying means (8) and reversing the direction of rotation or conveyance if the rod is incorrectly positioned.

14. A device as claimed in any one of claims 1 to 13, characterized in that a second light barrier (10b) or like sensor is provided in the conveying direction of the means of further conveyance (8), preferably of a transverse conveyor, said second light barrier or the like being in spaced relationship to the first light barrier (10a) and serving to reverse the conveying direction of the conveying means (8) in the event of the rods (2) being incorrectly positioned or accumulating.

15. A device as claimed in any one of claims 1 to 14, characterized in that the deflection pulley (6) is rotatably mounted on the drive shaft (13) of the segmental discs (11) and that the drawing elements (3) are preferably belts particularly wound on drums ( 7 ) located after the belt run-off of the deflection pulleys (6).

16. A device as claimed in any one of claims 1 to 14, characterized in that the drawing elements (3) are chains, particularly round link chains, the driving and deflection pulleys (6) thereof being pocket wheels, and that the segmental discs (11) provided with a separate drive, e.g. a chain or toothed belt drive (21), are rotatably mounted on the drive shaft (13) of the deflection pulleys (6).

## Revendications

1. Dispositif d'individualisation (1) pour des paquets de barres (2) notamment de section non ronde, avec des sangles (3), chaînes ou éléments de traction similaires pour recevoir le paquet, suspendus en auge dans des plans parallèles, ces éléments de traction (3) étant fixés à leur extrémité (5) éloignée du point d'individualisation (4), notamment plus haute, et pouvant, au point d'individualisation (4), être tirés dans leur direction d'orientation par des poulies de renvoi (6) et(ou des tambours (7), par exemple être enroulés puis déroulés sur les(des tambours (7), un transporteur (8) étant prévu dans la région du point d'individualisation (4) pour évacuer la barre individualisée (2), et un moyen de contrôle étant prévu à distance au-dessus du transporteur (8) pour rejeter les barres (2) de section trop grande ou orientées dans une position incorrecte, caractérisé en ce qu'il est prévu deux saillies de levage, étroites dans la direction de l'axe de la poulie de renvoi (6), par exemple des doigts, des disques segmentés (11) ou des leviers pivotants, chaque' saillie de levage étant disposée à côté d'une face terminale de la poulie de renvoi et dépassant, au moins dans la région du paquet à individualiser et de l'auge formée par les éléments de traction (3), du contour de la poulie de renvoi (6) et des éléments de traction (3) par une face de butée (12) partant en saillie au voisinage immédiat de ces derniers, et chaque saillie de levage pouvant être déplacée dans la direction de levage des éléments de traction (3), et en ce que les faces de butée (12), dans la région de leur tangente horizontale aux poulies de renvoi (6), constituent avec le contour de ces dernières et(ou avec l'élément de traction (3) un espace ouvert pour recevoir une barre (2).

2. Dispositif selon la revendication 1, caractérisé en ce que la saillie de levage munie de la face de butée (12) est rotative ou pivotante, et est de préférence montée coaxialement à l'axe de rotation de la poulie de renvoi (6), notamment sur l'axe ou arbre (13) de cette dernière.

3. Dispositif selon la revendication 1 ou 2, caractérisé en ce que la saillie de levage, de préférence le disque segmenté (11), est pivotante ou rotative en va-et-vient, et peut alors chaque fois être déplacée, dans la direction de transport, au moins jusqu'à un point supérieur de la poulie de renvoi (6), au début du transporteur (8) et à sa hauteur, puis ramenée à sa position initiale.

4. Dispositif selon l'une des revendications 1 à 3, caractérisé en ce que la saillie de levage en position haute constitue simultanément un écarteur entre la barre (2) soulevée et les barres (2) restant en arrière.

5. Dispositif selon l'une des revendications 1 à 4, caractérisé en ce que le disque segmenté (11) laisse libre un segment d'angle obtus égal de préférence à 180° et, en position haute de l'arête de segment transporteuse ou encore de la face de butée (12), la partie inférieure du disque segmenté (11) reste à l'extérieur de l'élément de traction (3) et de l'auge formée par ce dernier.

6. Dispositif selon l'une des revendications 1 à 5, caractérisé en ce que le palier de pivotement de la saillie de levage, afin de modifier la longueur saillante de la face de butée (12) pendant le pivotement, notamment de diminuer cette longueur lors du pivotement vers le haut, est disposé excentriquement par rapport à celui de la poulie de renvoi (6).

7. Dispositif selon l'une des revendications 1 à 6, caractérisé en ce qu'un organe de comptage, par exemple un fin de course à talon de commutation, est disposé dans le parcours du transporteur (8) et est relié, en matière de commande, au mouvement de levage de l'élément de traction (3) et au mouvement d'individualisation des saillies de levage de telle sorte que le processus de levage et d'individualisation peut être répété autant de fois que nécessaire jusqu'à ce qu'une barre (2) ait parcouru le parcours de transport.

8. Dispositif selon l'une des revendications 1 à 7, caractérisé en ce qu'un détecteur photo-électrique ou similaire est prévu pour détecter la position des barres accumulées (2), et il commande le mouvement de levage et d'abaissement des éléments de traction (3) conjointement avec le mouvement des saillies de levage d'individualisation (disques segmentés 11) jusqu'à ce qu'une position de barre préprogrammée soit décelée, le mouvement des éléments de traction (3) étant alors interrompu et la saillie de levage pivotée pour soulever une barre (2) vers le parcours de transport (8).

9. Dispositif selon l'une des revendications 1 à 8, caractérisé en ce que le palier fixe d'élément de traction, ou encore le point de fixation (5) de l'élément de traction (3) qui est éloigné du point d'individualisation (4), peut être déplacé en direction des poulies de renvoi (6).

10. Dispositif selon l'une des revendications 1 à 9, caractérisé en ce qu'un longeron de support (17) ou élément d'ossature similaire, portant l'extrémité fixée (5) du(des éléments de traction (3), peut être pivoté en direction de la poulie de renvoi (6), autour d'un axe (18) disposé à distance du point de fixation (5), de préférence à proximité du sol.

11. Dispositif selon l'une des revendications précédentes, caractérisé en ce qu'afin de modifier la longueur de la face de butée (12), la saillie de levage ou le disque segmenté (11) peut, notamment à l'aide de trous oblongs (15) ou similaires, être déplacé perpendiculairement à l'axe de pivotement (13), et fixé en position, par rapport à un disque de support (14) portant le disque se9menté (11).

12. Dispositif selon l'une des revendications 1 à 11, caractérisé en ce que la longueur du porte-à-faux ou encore de la face de butée (12) par rapport à l'élément de traction (3) est inférieure ou égale à la largeur (b) ou hauteur (h) de section des barres (2).

13. Dispositif selon l'une des revendications 1 à 12, caractérisé en ce qu'un détecteur réagissant à la présence et à la position de la barre (2) et de sa section est prévu dans la région de la position haute du disque segmenté (11) et de sa face de butée (12), de préférence un barrage photo-électrique (10a) et éventuellement un déflecteur, qui commande l'entraînement du disque segmenté (11), de l'élément de traction (3) et(ou du transporteur (8) et inverse la direction de rotation ou de transport en présence de positions incorrectes de la barre.

14 Dispositif selon l'une des revendications 1 à 13, caractérisé en ce qu'un second barrage photo-électrique (10b) ou détecteur similaire est prévu à distance du premier barrage photo-électrique (10a) dans la direction de transport du transporteur consécutif (8), transporteur transversal de préférence, afin d'inverser la direction de transport du transporteur (8) en présence de positions incorrectes ou d'accumulation de barres (2).

15. Dispositif selon l'une des revendications 1 à 14, caractérisé en ce que la poulie de renvoi (6) est montée rotative sur l'arbre d'entraînement (13) des disques segmentés (11), et en ce que les éléments de traction (3) sont de préférence des sangles, qui sont notamment enroulées sur des tambours (7) montés en aval de la sortie des sangles des poulies de renvoi (6).

16. Dispositif selon l'une des revendications 1 à 14, caractérisé en ce que les éléments de traction (3) sont des chaînes, notamment des chaînes à maillons ronds, dont les poulies d'entraînement et de renvoi (6) sont des roues de chaînes à poches, et en ce que les disques segmentés (11), munis d'un propre entraînement, par exemple un entraînement par chaîne ou par courroie dentée (21), sont montés rotatifs sur l'arbre d'entraînement (13) des poulies de renvoi (6).

Fig. 1

EP 0 339 488 B1

Fig. 3

Fig. 2

Fig. 4

Fig. 5

Fig.7

Fig. 8

Fig.6

EP 0 339 488 B1

Fig. 9